# EUROPEAN PATENT APPLICATION

(11) **EP 4 850 994 A1**
(43) Date of publication of application: **09.12.2026**
(21) Application number: 25180291.4
(22) Date of filing: 02.06.2025
(51) Int. Cl.: B60S 1/38, B60S 1/40

(54) **WIPER BLADE ADAPTER ASSEMBLY**

(71) Applicant: Danyang UPC Auto Parts Co., Ltd., 212300 Danyang, Zhenjiang, Jiangsu (CN)
(72) Inventor: CHANG, Che-Wei, 22069 New Taipei City (TW); YANG, Cheng-Kai, 22069 New Taipei City (TW); CHANG, Chuan-Chih, 22069 New Taipei City (TW)
(74) Representative: 2K Patent Partnerschaft mbB

(57) **Abstract**

This disclosure is a wiper blade adapter assembly (1) including a fixing base (10), an adapter seat (20), and a latching member (30). The fixing base (10) includes a housing seat (11), a first pivot portion (12), and a first positioning portion (13). The housing seat (11) includes a first accommodating space (111) and a second accommodating space (112), and multiple sliding grooves (113). The adapter seat (20) includes a plate body (21) and a pivot seat (22). The plate body (21) has multiple ribs (211). The adapter seat (20) is received in the first accommodating space (111). The latching member (30) includes a block (31), a second pivot portion (32), and a second positioning portion (33). The latching member (30) is movably coupled to the housing seat (11), and the latching member (30) is positioned in the second accommodating space (112). The latching member (30) abuts against the adapter seat (20) to prevent the adapter seat (20) from detaching from the fixing base (10).

## Description

### BACKGROUND OF THE DISCLOSURE

### Technical Field

The technical field relates to a wiper blade, and particularly to a wiper blade adapter assembly.

### Description of Related Art

A wiper blade is installed on the windshield of the car and is connected to the driving arm of the car. The driving arm drives the wiper blade to swing repeatedly on the windshield to wipe away rainwater, dirt, and other foreign substances from the windshield.

In the current wiper blade structure design on the market, the types of driving arms vary depending on the car manufacturer and their models. Additionally, the driving arms of different designs usually have to be matched with specific connecting bases to connect the wiper blade. Furthermore, different models of connecting bases have different positioning methods and ways of connecting the wiper blades, which makes the wiper blade assembly complex and inconvenient to use.

In view of the above drawbacks, the inventor proposes this disclosure based on his expert knowledge and elaborate researches in order to solve the problems of related art.

### SUMMARY OF THE DISCLOSURE

This disclosure provides a wiper blade adapter assembly to simplify the assembly method and increase the convenience of use.

This disclosure is a wiper blade adapter assembly includes a fixing base, an adapter seat, and a latching member. The fixing base includes a housing seat, a first pivot portion arranged on one side of the housing seat, and a first positioning portion arranged on the side opposite to the first pivot portion. The housing seat includes a first accommodating space and a second accommodating space adjacent to each other. A plurality of sliding grooves are arranged on the periphery of the first accommodating space. The adapter seat includes a plate body and a pivot seat connected to the plate body. The plate body includes a plurality of ribs located on the periphery thereof. The adapter seat moves along the sliding grooves via the ribs and to be received in the first accommodating space. The latching member includes a block, a second pivot portion arranged on the block, and a second positioning portion arranged on the side opposite to the second pivot portion. The latching member is movably coupled to the housing seat through the second pivot portion pivotally connected to the first pivot portion, and the latching member is retained in the second accommodating space through the second positioning portion engaging with the first positioning portion, and the latching member abuts against the adapter seat to restrict movement of the adapter seat and prevent detachment from the fixing base.

In one embodiment of this disclosure, the wiper blade adapter assembly further includes a pair of deflector covers. The fixing base includes a pair of limiting slots located on two sides of the housing seat, and each deflector cover is inserted in each limiting slot.

In one embodiment of this disclosure, the housing seat includes a pair of shield covers on both sides thereof, and each of the pair of limiting slots is arranged on a side surface of each shield cover.

In one embodiment of this disclosure, the first pivot portion includes a pivot shaft, and the second pivot portion includes a pivot hole.

In one embodiment of this disclosure, the first positioning portion includes an engaging slot, and the second positioning portion includes a hook.

In one embodiment of this disclosure, the latching member includes an elastic arm located at one end of the block, and the second positioning portion is located on the elastic arm.

In one embodiment of this disclosure, an opening slot is defined between the elastic arm and the block.

In one embodiment of this disclosure, each of the slide grooves is structured as an L-shaped groove.

In one embodiment of this disclosure, the wiper blade adapter assembly further includes a wiper set combined on the bottom side of the fixing base.

In one embodiment of this disclosure, the wiper set includes a wiper seat, a spring sheet inserted on the upper side of the wiper seat, and a wiper inserted on a bottom side of the wiper seat, and the top of the wiper seat is inserted on a bottom side of the fixing base.

In comparison with the related art, the wiper blade adapter assembly includes a fixing base, an adapter seat, and a latching member. The adapter seat moves into the fixing base along the slide grooves, and then the latching member is rotated into the fixing base and engaged. Thus, the latching member is positioned on the fixing base and abuts against the adapter seat. As a result, when a different type of adapter seat is to be replaced, the adapter seat only needs to have the same size and the sliding groove to be assembled into the fixing base for combining different types of driving arm assemblies to increase the convenience of assembly.

### BRIEF DESCRIPTION OF THE DRAWINGS

The features of the disclosure believed to be novel are set forth with particularity in the appended claims. The disclosure itself, however, may be best understood by reference to the following detailed description of the disclosure, which describes a number of exemplary embodiments of the disclosure, taken in conjunction with the accompanying drawings, in which:
FIG. 1 depicts a perspective schematic view of the wiper blade adapter assembly according to this disclosure.
FIG. 2 depicts a perspective exploded schematic view of the wiper blade adapter assembly according to this disclosure.
FIG. 3 and FIG. 4 depict schematic views of the assembly of the adapter seat according to this disclosure.
FIG. 5 and FIG. 6 depict rotational engagement schematic views of the latch member according to this disclosure.
FIG. 7 depicts a cross-sectional view of the wiper blade adapter assembly according to this disclosure.

### DETAILED DESCRIPTION

The technical contents of this disclosure will become apparent with the detailed description of embodiments accompanied with the illustration of related drawings as follows. It is intended that the embodiments and drawings disclosed herein are to be considered illustrative rather than restrictive.

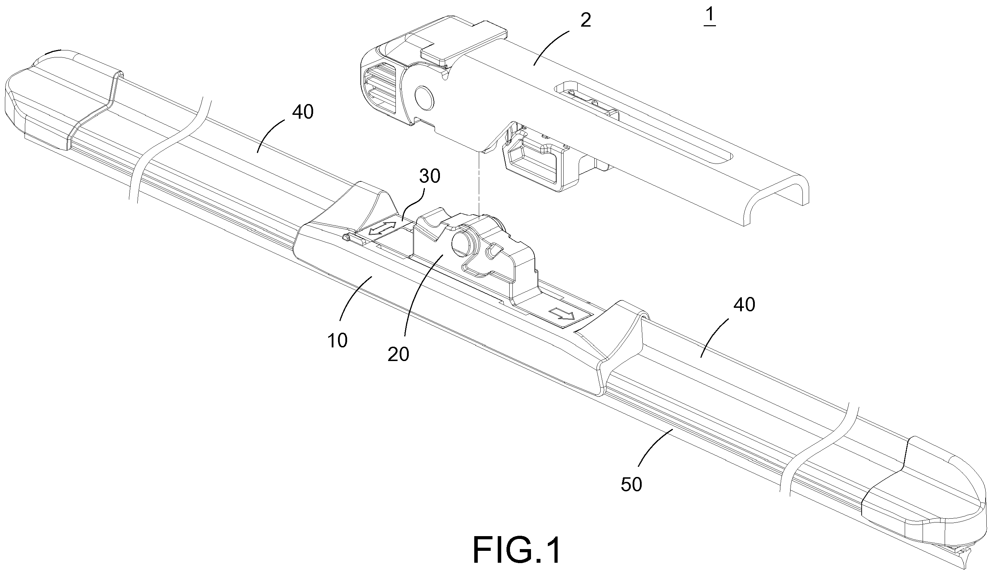

Please refer to FIG. 1, which depicts a perspective schematic view of the wiper blade adapter assembly according to this disclosure. This disclosure relates to a wiper blade adapter assembly 1 for combining with a driving arm 2. The wiper blade adapter assembly 1 includes a fixing base 10, an adapter seat 20, and a latching member 30. The adapter seat 20 is disposed on the fixing base 10 and is positioned on the fixing base 10 through the clamping of the latching member 30.

In this embodiment, the wiper blade adapter assembly 1 further includes a pair of deflector covers 40 and a wiper set 50. The wiper set 50 is combined on the bottom side of the fixing base 10. The pair of deflector covers 40 is combined on two sides of the fixing base 10 and covers the wiper set 50. A more detailed description of the structure of the wiper blade adapter assembly 1 is as follows.

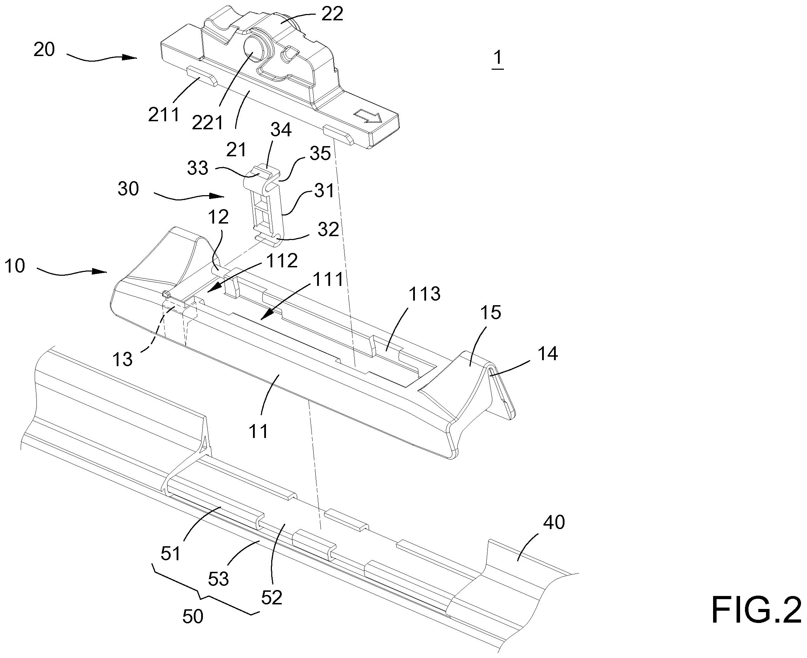

Please refer to FIG. 2, which depicts a perspective exploded schematic view of the wiper blade adapter assembly according to this disclosure. The fixing base 10 includes a housing seat 11, a first pivot portion 12 arranged on one side of the housing seat 11, and a first positioning portion 13 arranged on the side opposite to the first pivot portion 12. The housing seat 11 includes a first accommodating space 111 and a second accommodating space 112 adjacent to each other. Additionally, a plurality of sliding grooves 113 are arranged on the periphery of the first accommodating space 111. In this embodiment, each of the sliding grooves 113 is structured as an L-shaped groove.

The fixing base 10 includes a pair of limiting slots 14 located on two sides of the housing seat 11. Furthermore, the housing seat 11 includes a pair of shield covers 15 on both sides thereof. The pair of limiting slots 14 are arranged on the side surfaces of the pair of shield covers 15. Thus, the deflector covers 40 are inserted in the limiting slots 14 to be combined with the fixing base 10.

The adapter seat 20 includes a plate body 21 and a pivot seat 22 connected to the plate body 21. The plate body 21 includes a plurality of ribs 211 located on the periphery thereof. The pivot seat 22 includes a boss 221 coupled to the driving arm 2. Furthermore, the adapter seat 20 moves along the sliding grooves 113 through the ribs 211 being received in the first accommodating space 111.

Furthermore, the latching member 30 includes a block 31, a second pivot portion 32 arranged on the block 31, and a second positioning portion 33 arranged on the side opposite to the second pivot portion 32. The latching member 30 is movably coupled to the housing seat 11 through the second pivot portion 32 being pivotally connected to the first pivot portion 12. The latching member 30 is positioned in the second accommodating space 112 through the second positioning portion 33 being engaged with the first positioning portion 13, and the latching member 30 abuts against the adapter seat 20 to prevent the adapter seat 20 from detaching from the fixing base 10.

In more detail, the first pivot portion 12 includes a pivot shaft, and the second pivot portion 32 includes a pivot hole. Additionally, the first positioning portion 13 includes an engaging slot, and the second positioning portion 33 includes a hook. Specifically, the latching member 30 includes an elastic arm 34 located at one end of the block 31, and the second positioning portion 33 is located on the elastic arm 34. Moreover, an opening slot 35 is defined between the elastic arm 34 and the block 31. The arrangement of the opening slot 35 may increase the elastic force of the elastic arm 34 to facilitate engagement.

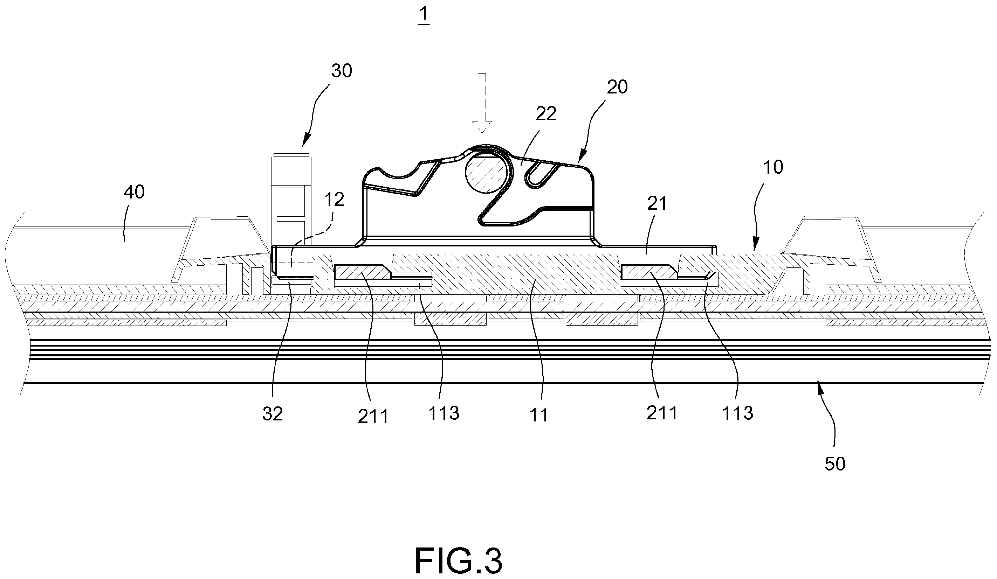

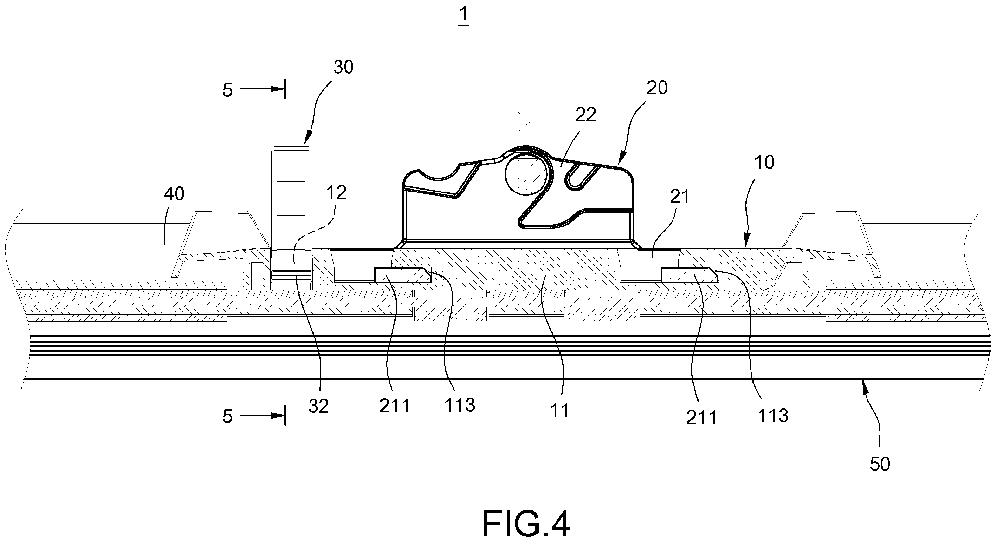

Please further refer to FIG. 3 and FIG. 4, which depict schematic views of the assembly of the adapter according to this disclosure. The latching member 30 is movably coupled to the housing seat 11 through the second pivot portion 32 being pivotally connected to the first pivot portion 12. Moreover, the adapter seat 20 first moves vertically into the housing seat 11 through the ribs 211 moving along the sliding grooves 113 and then moving horizontally along the sliding grooves 113 to be received in the housing seat 11.

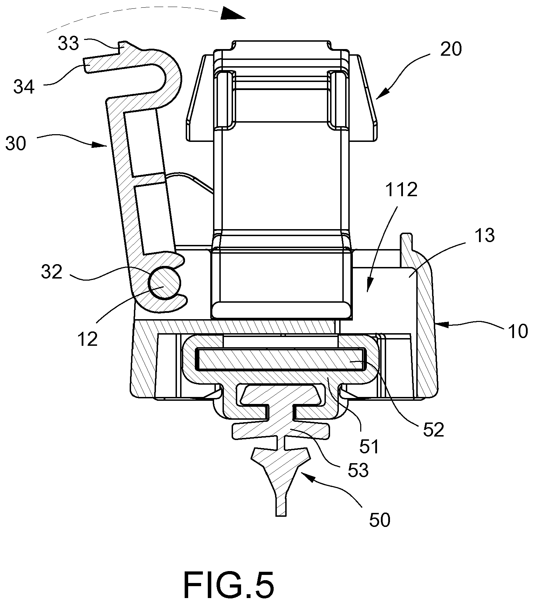

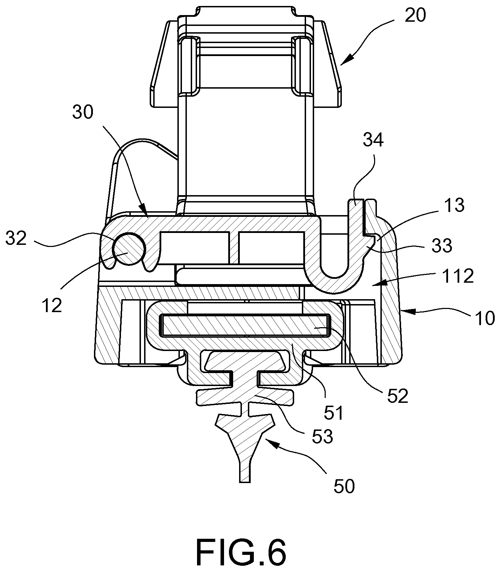

Please refer to FIG. 5 and FIG. 6, which depict rotational engagement schematic views of the latch member according to this disclosure. The adapter seat 20 of this disclosure is assembled into the fixing base 10 along the sliding grooves 113. Then, the latching member 30 is rotated into the second accommodating space 112 of the housing seat 11 with the first pivot portion 12 as the rotation center, and the elastic arm 34 is held while force is applied to engage the second positioning portion 33 with the first positioning portion 13. Therefore, the latching member 30 is positioned on the housing seat 11.

It should be noted that the wiper set 50 includes a wiper seat 51, a spring sheet 52 inserted in the upper side of the wiper seat 51, and a wiper 53 inserted in the bottom side of the wiper seat 51. Additionally, the top of the wiper seat 51 is inserted in the bottom side of the fixing base 10.

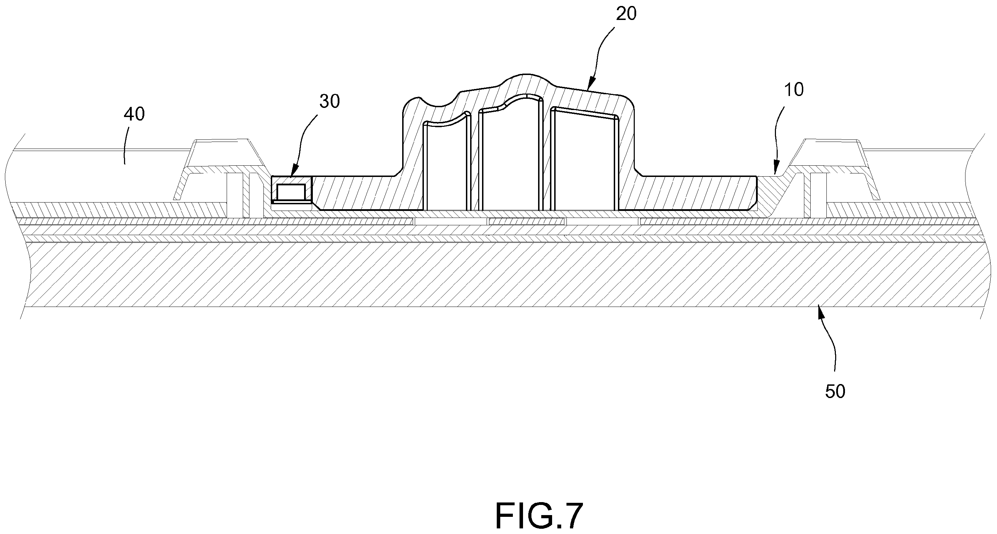

Please further refer to FIG. 7, which depicts a cross-sectional view of the wiper blade adapter assembly according to this disclosure. After the latching member 30 of this disclosure is positioned on the housing seat 11, the adapter seat 20 is positioned on the fixing base 10 by the engagement of the latching member 30 to prevent detachment. Similarly, when a different type of adapter seat 20 is to be replaced, the adapter seat 20 only needs to have the same size and the sliding groove 113 to be assembled into the fixing base 10 for combining different types of driving arm assemblies for the convenience of assembly.

## Claims

1. A wiper blade adapter assembly (1), comprising:
a fixing base (10), comprising a housing seat (11), a first pivot portion (12) arranged on one side of the housing seat (11), and a first positioning portion (13) arranged on a side opposite to the first pivot portion (12), wherein the housing seat (11) comprises a first accommodating space (111) and a second accommodating space (112) adjacent to each other, and a plurality of sliding grooves (113) are arranged on a periphery of the first accommodating space (111);
an adapter seat (20), comprising a plate body (21) and a pivot seat (22) connected to the plate body (21), the plate body (21) comprising a plurality of ribs (211) located on a periphery thereof, wherein the adapter seat (20) moves along the sliding grooves (113) via the ribs (211) to be received in the first accommodating space (111); and
a latching member (30), comprising a block (31), a second pivot portion (32) arranged on the block (31), and a second positioning portion (33) arranged on a side opposite to the second pivot portion (32), wherein the latching member (30) is movably coupled to the housing seat (11) through the second pivot portion (32) being pivotally coupled to the first pivot portion (12), and the latching member (30) is positioned in the second accommodating space (112) through the second positioning portion (33) being engaged with the first positioning portion (13) to abut against the adapter seat (20) to restrict the adapter seat (20) in the fixing base (10).

2. The wiper blade adapter assembly (1) according to claim 1, further comprising a pair of deflector covers (40), wherein the fixing base (10) comprises a pair of limiting slots (14) located on two sides of the housing seat (11), and each deflector cover (40) is inserted in each limiting slot (14).

3. The wiper blade adapter assembly (1) according to claim 2, wherein the housing seat (11) comprises a pair of shield covers (15) located on two sides thereof, and each limiting slots (14) is arranged on a side surface of each shield cover (15).

4. The wiper blade adapter assembly (1) according to claim 1, wherein the first pivot portion (12) comprises a pivot shaft, and the second pivot portion (32) comprises a pivot hole.

5. The wiper blade adapter assembly (1) according to claim 1, wherein the first positioning portion (13) comprises an engaging slot, and the second positioning portion (33) comprises a hook.

6. The wiper blade adapter assembly (1) according to claim 5, wherein the latching member (30) comprises an elastic arm (34) located at one end of the block (31), and the second positioning portion (33) is located on the elastic arm (34).

7. The wiper blade adapter assembly (1) according to claim 6, wherein an opening slot is defined between the elastic arm (34) and the block (31).

8. The wiper blade adapter assembly (1) according to claim 1, wherein each sliding groove (13) is structured as an L-shaped groove.

9. The wiper blade adapter assembly (1) according to claim 1, further comprising a wiper set (50) combined on a bottom side of the fixing base (10).

10. The wiper blade adapter assembly (1) according to claim 9, wherein the wiper set (50) comprises a wiper seat (51), a spring sheet (52) inserted in an upper side of the wiper seat (51), and a wiper (53) inserted in a bottom side of the wiper seat (51), and a top of the wiper seat (51) is inserted in a bottom side of the fixing base (10).
